# EUROPEAN PATENT APPLICATION

(11) **EP 4 725 993 A1**
(43) Date of publication of application: **15.04.2026**
(21) Application number: 24823177.1
(22) Date of filing: 20.05.2024
(51) Int. Cl.: C08L 83/07, C08K 3/22, C08K 5/5419, C08L 83/05, C08L 83/06, C09K 5/14

(54) **THERMALLY CONDUCTIVE TWO-COMPONENT ADDITION CURING TYPE SILICONE COMPOSITION, CURED PRODUCT, AND SHEET**

(30) Priority: 12.06.2023 JP 2023096502
(71) Applicant: SHIN-ETSU CHEMICAL CO., LTD., Tokyo 100-0005 (JP)
(72) Inventor: TABATA, Yuji, Annaka-shi, Gunma 379-0224 (JP); IWATA, Mitsuhiro, Annaka-shi, Gunma 379-0224 (JP)
(74) Representative: Schicker, Silvia
(86) International application number: PCT/JP2024/018539
(87) International publication number: WO 2024/257555

(57) **Abstract**

The present invention is a thermally-conductive two-part addition-curable silicone composition including a first liquid and a second liquid, and including: (A) organopolysiloxane having alkenyl groups; (B) organohydrogenpolysiloxane; (C) a thermally conductive filler containing spherical aluminum oxide powder (C-1) to (C-4) with specific average particle sizes and spherical or irregularly shaped aluminum oxide powder (C-5) with specific average particle size; (D) a silane coupling agent and/or organopolysiloxane represented by the following general formula (1); and (E) a platinum catalyst, wherein, the first liquid does not contain the component (B), and the second liquid does not contain the component (E), the component (A) to (E) are contained in specific ratio in the entire composition. This can provide a thermally-conductive two-part addition-curable silicone composition having high thermal conductivity and high moisture resistance, and a cured product thereof.

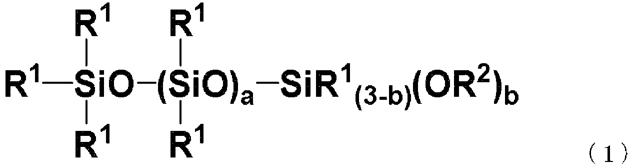

## Description

### TECHNICAL FIELD

The present invention relates to a thermally-conductive two-part addition-curable silicone composition, a cured product, and a sheet.

### BACKGROUND ART

Heat-generating electronic components are well known to generate heat during use, resulting in decreased performance, so various heat-dissipation techniques have been employed as a means to solve this problem. In general, the heat dissipation is performed by disposing a cooling member (such as a heat sink) near a heat-generating member, bringing them into close contact to remove the heat through the cooling member. In this event, if there is a space between the heat-generating member and the cooling member, thermal conductivity is lowered due to the presence of air having poor thermal conductivity, so that the temperature of the heat-generating member cannot be reduced sufficiently. In order to prevent this phenomenon, heat-dissipation materials, such as heat-dissipating grease or heat-dissipating sheets, with good thermal conductivity and good ability to follow the surface of the member, have been used.

In recent years, due to miniaturization and increased density of electronic products, heat generation from mounted components has tended to increase. For example, CPUs (central processing units) and GPUs (graphics processing units) generate significantly more heat as their performance increases. In order to maintain low operating temperature and keep high performance, the heat-dissipation materials used for a thermal countermeasure are required to have high heat-dissipation performance.

Furthermore, since GPUs used in ADAS (Advanced Driver Assistance Systems) are for automotive applications, heat-dissipation material used for a thermal countermeasure of GPU is required to have insulation properties and high reliability. Examples of thermally conductive fillers used in heat-dissipation materials include aluminum oxide, aluminum nitride, and magnesium oxide, which are insulating and highly thermally conductive. However, while the aluminum nitride and the magnesium oxide have higher thermal conductivity than the aluminum oxide, they are hygroscopic and have a problem of absorbing moisture and then exhibiting strong alkalinity.

As an example of a thermally conductive resin composition using the aluminum oxide as thermally conductive filler, a highly thermally conductive resin composition, in which spherical aluminum oxide powder with an average particle size of 10 to 50 µm, defined by average sphericity and hydroxyl content, and aluminum oxide powder with an average particle size of 0.3 to 1 µm are used and their blending ratio in volume and blending amount are defined, is disclosed as an example, but the composition fails to exhibit sufficient thermal conductivity in a filler having the average particle size of 50 µm at maximum (Patent Document 1: JP5755977B2).

Furthermore, a compound particle for a highly thermally conductive resin compound that contains 60 to 80 vol% of spherical alumina particles with an average particle size of 80 to 100 µm and 20 to 40 vol% of non-spherical alumina particles with an average particle size of 0.5 to 7 µm and a highly thermally conductive resin compound that contains it in 60 to 85 vol% as ratio in volume has been disclosed as examples, but they had problems that oil separation occurred over time and its viscosity increased when containing a large amount of alumina particles with a large average particle size, and viscosity increased (Patent Document 2: JP5085050B2).

Additionally, a highly thermally conductive silicone composition that contains spherical aluminum oxide particles with an average particle size of 50 to 150 µm and spherical or irregularly shaped aluminum oxide particles with an average particle size of 0.5 to 7 µm in a total vol% of 80 to 90% and in which a blending ratio of the spherical aluminum oxide particles with an average particle size of 50 to 150 µm to the spherical or irregularly shaped aluminum oxide particles with an average particle size of 0.5 to 7 µm is 5:5 to 9.5:0.5 has been disclosed, but the composition contained a large amount of silane coupling agent of organopolysiloxane and had a problem of significant increase of hardness and a significantly reduced elongation under high-temperature and high-humidity conditions (Patent Document 3: JP6648837B2).

### CITATION LIST

### PATENT LITERATURE

| | |
|---|---|
| Patent Document 1: | JP5755977B2 |
| Patent Document 2: | JP5085050B2 |
| Patent Document 3: | JP6648837B2 |

### SUMMARY OF INVENTION

### TECHNICAL PROBLEM

In order to achieve high thermal conductivity, it is considered to increase the proportion of thermally conductive filler in a thermally conductive composition, but increase in the proportion of the thermally conductive filler increases viscosity and worsens operability. Furthermore, the increase in the proportion of thermally conductive filler requires an increase of the proportion of a silane coupling agent or organopolysiloxane having an alkoxy group at one end, which treats surface of the thermally conductive fillers. The silane coupling agents or the organopolysiloxane are considered to condense under moisture-resistant conditions, and thus, inclusion of a large amount of these in a thermally conductive composition causes increasing of hardness of a cured product of the thermally conductive composition under moisture-resistant conditions. The cured product of a thermally conductive composition with increased hardness has reduced elongation and is unable to follow warping or the like of a substrate, reducing its reliability as a heat-dissipation material.

Unlike one-part addition-curable heat-dissipation materials, two-part addition-curable materials characterized by their ability to be stored at room temperature can undergo dehydrogenation of the organohydrogenpolysiloxane during room-temperature storage due to the thermally conductive filler. Therefore, it is necessary to prevent this dehydrogenation by surface-treating the thermally conductive filler to reduce its surface reactivity. Therefore, adjusting an appropriate amount of the silane coupling agent or the organopolysiloxane having an alkoxy group at one end is necessary to enhance the room-temperature storage stability of the two-part addition-curable heat-dissipation materials.

The present invention was made in view of the above circumstances and has for its object to provide a thermally-conductive two-part addition-curable silicone composition having high thermal conductivity and high moisture resistance.

### SOLUTION TO PROBLEM

As a result of their diligent study to solve the above problems, the inventors found that a thermally-conductive two-part addition-curable silicone composition, including a first liquid and a second liquid, solves the above problem, and have completed the present invention, wherein the first liquid incorporates organopolysiloxane having an alkenyl group, spherical aluminum oxide powder with an average particle size of 80 to 120 µm, spherical aluminum oxide powder with an average particle size of 60 to 80 µm, spherical aluminum oxide powder with an average particle size of 25 to 60 µm, spherical aluminum oxide powder with an average particle size of 5 to 25 µm, and spherical or irregularly shaped aluminum oxide powder with an average particle size of 0.1 to 5 µm are blended in specific amounts and ratios and contains a silane coupling agent and/or organopolysiloxane having a hydrolyzable group and a platinum catalyst for a hydro-silylation reaction; and the second liquid incorporates organopolysiloxane having an alkenyl group, organohydrogenpolysiloxane having a hydrogen atom bonded to a silicon atom, spherical aluminum oxide powder with an average particle size of 80 to 120 µm, spherical aluminum oxide powder with an average particle size of 60 to 80 µm, spherical aluminum oxide powder with an average particle size of 25 to 60 µm, spherical aluminum oxide powder with an average particle size of 5 to 25 µm, and spherical or irregularly shaped aluminum oxide powder with an average particle size of 0.1 to 5 µm are blended in specific amounts and ratios and contains a silane coupling agent and/or organopolysiloxane having a hydrolyzable group.

Specifically, the present invention is a thermally-conductive two-part addition-curable silicone composition comprising a first liquid and a second liquid, and comprising:
(A) organopolysiloxane having at least two alkenyl groups bonded to a silicon atom per molecule;
(B) organohydrogenpolysiloxane having at least two hydrogen atoms bonded to a silicon atom per molecule;
(C) a thermally conductive filler comprising spherical aluminum oxide powder (C-1) with an average particle size of 80 µm or more and 120 µm or less, spherical aluminum oxide powder (C-2) with an average particle size of 60 µm or more and less than 80 µm, spherical aluminum oxide powder (C-3) with an average particle size of 25 µm or more and less than 60 µm, spherical aluminum oxide powder (C-4) with an average particle size of 5 µm or more and less than 25 µm, and spherical or irregularly shaped aluminum oxide powder (C-5) with an average particle size of 0.1 µm or more and less than 5 µm;
(D) a silane coupling agent and/or organopolysiloxane represented by the following general formula (1), 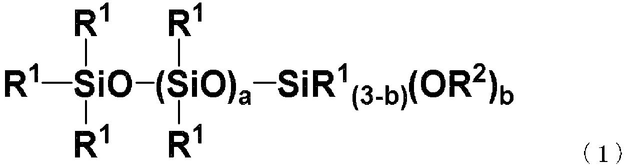 wherein R¹ represents independently a monovalent hydrocarbon group, R² represents independently an alkyl group, an alkoxyalkyl group, an alkenyl group, or an acyl group, "a" represents a positive number of 5 to 100, and "b" represents an integer of 1 to 3; and
(E) a platinum catalyst for a hydro-silylation reaction,
   wherein, among the components (A) to (E), the first liquid contains the components (A), (C), (D), and (E) and does not contain the component (B), and the second liquid contains the components (A), (B), (C), and (D), and does not contain the component (E),
   the component (D) is contained in an amount of 100 to 200 parts by mass based on 100 parts by mass of sum of the components (A) and (B) in the entire composition including the first liquid and the second liquid,
   the component (C-1) is contained in an amount of 200 to 600 parts by mass, the component (C-2) is contained in an amount of 200 to 500 parts by mass, the component (C-3) is contained in an amount of 200 to 500 parts by mass, the component (C-4) is contained in an amount of 200 to 500 parts by mass, the component (C-5) is contained in an amount of 300 to 700 parts by mass, each based on 100 parts by mass of sum of the components (A), (B), and (D), and
   total amount of the components (C-1) to (C-5) is 1700 to 2000 parts by mass based on 100 parts by mass of the sum of the components (A), (B), and (D).

In such a thermally conductive two-part addition-curable silicone composition, the blending ratio of the thermally conductive filler and the blending amount of the silane coupling agent or organopolysiloxane having an alkoxy group at one end are within appropriate ranges, and when this composition is cured, a sheet-like cured product with high thermal conductivity and high moisture resistance can be obtained.

In this case, viscosity at 25°C of each of the first liquid and the second liquid is preferably 30 to 800 Pa·s when measured at a rotation number of 10 rpm using a spiral viscometer.

When the viscosity is within the above range, the thermally-conductive two-part addition-curable silicone composition forms a stable shape and has excellent processability.

Further, the component (C-5) is preferably irregularly shaped aluminum oxide powder.

When the aluminum oxide powder of the component (C-5) has an irregular shape, the contact area between filler particles is larger than when the filler is spherical, and this can increase the thermal conductivity of the thermally conductive two-part addition-curable silicone composition.

Further, the present invention provides a cured product of the above thermally-conductive two-part addition-curable silicone composition, wherein the sheet-like cured product obtained by curing the thermally-conductive two-part addition-curable silicone composition has a hardness in the range of 20 to 80 as measured using a Shore OO hardness meter specified in ASTM D 2240-05.

When the hardness of the sheet-shaped cured product is within the range of 20 to 80, the cured product will be rubber-like with low hardness, reducing likelihood of that the cured product comes off its mounted position due to shock, such as vibration. Furthermore, the cured product does not exert excessive stress on an electronic component in contact with it, thereby improving the electronic component's solder life.

Further, the present invention provides a cured product of the thermally-conductive two-part addition-curable silicone composition, wherein the sheet-like cured product hardness obtained by curing the thermally-conductive two-part addition-curable silicone composition has an elongation at break of 10% or more, as exposed to 85°C/85% RH for 1000 hours and then measured according to a tensile test specified in JIS K 7161 using a dumbbell tensile test piece No. 2 in accordance with JIS K 6251.

When elongation at break of the sheet-shaped cured product in the tensile test is 10% or more, in the event that the cured product is used as a heat-dissipation material, the heat-dissipation material can follow warping of electronic components that occurs under high-temperature and high-humidity conditions and can efficiently remove heat from the electronic components.

Further, the present invention provides a thermally conductive sheet, which is the thermally conductive sheet made by curing the thermally-conductive two-part addition-curable silicone composition.

Such thermally conductive sheets have high thermal conductivity and reduce an increase of hardness and a decrease of elongation of the cured product under moisture-resistant conditions, making them useful as excellent heat-dissipation materials for heat-generating electronic components.

### ADVANTAGEOUS EFFECTS OF INVENTION

According to the present invention, by using an appropriate blending ratio of thermally conductive filler and appropriate blending amounts of silane coupling agent or organopolysiloxane having an alkoxy group at one end, it is possible to provide a thermally conductive two-part addition-curable silicone composition having high thermal conductivity and high moisture resistance, and a cured product thereof. The cured product can be used as a heat-dissipation material for heat-generating electronic components, even under high-temperature and high-humidity conditions.

### DESCRIPTION OF EMBODIMENTS

As a result of their diligent study to solve the above problems, the inventors found that a thermally-conductive two-part addition-curable silicone composition, in which components for the thermally-conductive two-part addition-curable silicone composition each are incorporated in specific amounts and in specific ratio, solved the above problem, and have completed the present invention.

That is, the present invention is a thermally-conductive two-part addition-curable silicone composition comprising a first liquid and a second liquid, and comprising:
(A) organopolysiloxane having at least two alkenyl groups bonded to a silicon atom per molecule;
(B) organohydrogenpolysiloxane having at least two hydrogen atoms bonded to a silicon atom per molecule;
(C) a thermally conductive filler comprising spherical aluminum oxide powder (C-1) with an average particle size of 80 µm or more and 120 µm or less, spherical aluminum oxide powder (C-2) with an average particle size of 60 µm or more and less than 80 µm, spherical aluminum oxide powder (C-3) with an average particle size of 25 µm or more and less than 60 µm, spherical aluminum oxide powder (C-4) with an average particle size of 5 µm or more and less than 25 µm, and spherical or irregularly shaped aluminum oxide powder (C-5) with an average particle size of 0.1 µm or more and less than 5 µm;
(D) a silane coupling agent and/or organopolysiloxane represented by the following general formula (1), 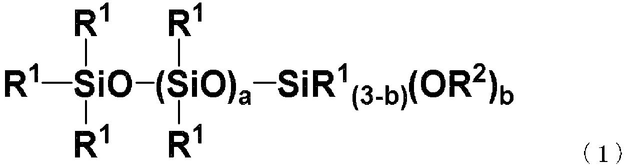 wherein R¹ represents independently a monovalent hydrocarbon group, R² represents independently an alkyl group, an alkoxyalkyl group, an alkenyl group, or an acyl group, "a" represents a positive number of 5 to 100, and "b" represents an integer of 1 to 3; and
(E) a platinum catalyst for a hydro-silylation reaction,
   wherein, among the components (A) to (E), the first liquid contains the components (A), (C), (D), and (E) and does not contain the component (B), and the second liquid contains the components (A), (B), (C), and (D) and does not contain the component (E),
   the component (D) is contained in an amount of 100 to 200 parts by mass based on 100 parts by mass of sum of the components (A) and (B) in the entire composition including the first liquid and the second liquid,
   the component (C-1) is contained in an amount of 200 to 600 parts by mass, the component (C-2) is contained in an amount of 200 to 500 parts by mass, the component (C-3) is contained in an amount of 200 to 500 parts by mass, the component (C-4) is contained in an amount of 200 to 500 parts by mass, the component (C-5) is contained in an amount of 300 to 700 parts by mass, each based on 100 parts by mass of sum of the components (A), (B), and (D), and
   total amount of the components (C-1) to (C-5) is 1700 to 2000 parts by mass based on 100 parts by mass of the sum of the components (A), (B), and (D).

Hereinafter, the present invention will be described in detail, but the present invention is not limited thereto.

### [Thermally-Conductive Two-Part Addition-Curable Silicone Composition]

The present invention relates to a thermally-conductive two-part addition-curable silicone composition. Particularly, it relates to a thermally-conductive two-part addition-curable silicone composition that exhibits excellent thermal conductivity, ease of handling, durability under high-temperature and high-humidity conditions, and reliability.

The inventive silicone composition is characterized by containing the above components (A) to (E), but may also contain other components as necessary. Each component will be described below.

### [(A) Organopolysiloxane Having At Least Two Alkenyl Groups Bonded to Silicon Atom Per Molecule]

The component (A) of the inventive composition is the main component (base polymer) of the composition. The component (A) is an organopolysiloxane having at least two alkenyl groups (hereinafter referred to as "silicon-bonded alkenyl groups") bonded to a silicon atom per molecule, and is, for example, represented by the following average compositional formula (2). The component (A) preferably has 2 to 50, and more preferably 2 to 20, silicon-bonded alkenyl groups mentioned above per molecule. These silicon-bonded alkenyl groups may be bonded to a silicon atom at a molecular chain end, at a non-end (i.e., other than the molecular chain ends) in a molecular chain, or at a combination thereof.

R³_{c}R⁴_{d}SiO_{(4-c-d)/2} (2)

In the formula, R³ independently represents an alkenyl group; R⁴ independently represents an unsubstituted or substituted monovalent hydrocarbon group not having an aliphatic unsaturated bond; and "c" represents 0.0001 to 0.2, "d" represents 1.7 to 2.2, and c+d satisfies being in the range of 1.90 to 2.40.

In formula (2), R³ is independently an alkenyl group, and examples of the alkenyl group include those having 2 to 6 carbon atoms, such as a vinyl group, an allyl group, an isopropenyl group, a 1-butenyl group, a 1-pentenyl group, and a 1-hexenyl group. Among these, an alkenyl group having 2 to 4 carbon atoms is preferable, and a vinyl group is particularly preferable.

In formula (2), unsubstituted or substituted monovalent hydrocarbon group R⁴, being the remaining organic group bonded to the silicon atom and having no aliphatic unsaturated bond, includes one having 1 to 12 carbon atoms, and is preferably a monovalent hydrocarbon group having 1 to 6 carbon atoms. Specific examples thereof include alkyl groups, such as a methyl group, an ethyl group, a propyl group, an isopropyl group, a butyl group, an isobutyl group, a tert-butyl group, a pentyl group, a hexyl group, a cyclohexyl group, an octyl group, and a dodecyl group; aryl groups, such as a phenyl group, a 1-naphthyl group, a 2-naphthyl group, and a tolyl; aralkyl groups, such as a benzyl group and a 2-phenylethyl group; and groups in which part or all of the hydrogen atoms of these groups are substituted with halogen atoms, such as fluorine, chlorine, and bromine, such as a chloromethyl group and a 3,3,3-trifluoropropyl group. From the viewpoint of ease of synthesis, etc., a methyl group, a phenyl group, and a 3,3,3-trifluoropropyl group are preferred.

Furthermore, "c" represents a number between 0.0001 and 0.2, and preferably between 0.0005 and 0.1. "d" represents a number between 1.7 and 2.2, and preferably between 1.9 and 2.0. c+d satisfies being between 1.90 to 2.40, and preferably between 1.95 and 2.05.

The kinematic viscosity at 25°C of the component (A), measured with an Ostwald meter, is preferably in the range of 10 to 100,000 mm²/s, and more preferably 100 to 50,000 mm²/s. When this kinematic viscosity is 10 to 100,000 mm/s, the resulting cured product is more excellent in strength, fluidity, and processability.

Examples of organopolysiloxane as the component (A) that satisfies the above requirements include one represented by the following general formula (3).

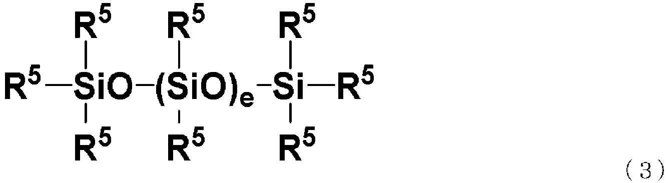

In the formula, R⁵ represents independently an unsubstituted or substituted monovalent hydrocarbon group provided that at least two of R⁵s are alkenyl groups, and "e" represents a number from 10 to 2,000.

In formula (3), the unsubstituted or substituted monovalent hydrocarbon group represented by R⁵ is the same as defined for R³ (alkenyl group) and R⁴ (unsubstituted or substituted monovalent hydrocarbon having no aliphatic unsaturated bond), and the number of carbon atoms, specific examples, and the like are also the same. However, at least two of R⁵, preferably 2 to 50, and more preferably 2 to 20, are alkenyl groups. When the number of the alkenyl groups is two or more, the resulting cured product of the thermally conductive silicone has sufficient crosslink density. When the number of the alkenyl groups is 50 or less, the cured product of the resulting thermally conductive silicone has sufficiently high crosslink density and the curability is preferable. Furthermore, "e" is preferably a number between 40 and 1,200, more preferably 50 to 600. When "e" is 40 or more, the viscosity of the resulting thermally conductive silicone composition is sufficient, the handling properties and processability are preferable, and the resulting cured product is not brittle. When "e" is 1,200 or less, the viscosity of the resulting thermally conductive silicone composition is appropriate, and the handling properties and processability are preferable.

Specific examples of the organopolysiloxanes represented by the above formula (3) include dimethylpolysiloxanes with both molecular chain ends blocked with dimethylvinylsiloxy groups, dimethylsiloxane-methylvinylsiloxane copolymers with both molecular chain ends blocked with trimethylsiloxy groups, dimethylsiloxane-methylvinylsiloxane copolymers with one molecular chain end blocked with a trimethylsiloxy group and another end with a dimethylvinylsiloxy group, dimethylsiloxane-methylvinylsiloxane copolymers with both molecular chain ends blocked with dimethylvinylsiloxy groups, and dimethylsiloxane-diphenylsiloxane copolymers with both molecular chain ends blocked with dimethylvinylsiloxy groups.

One kind of organopolysiloxane as the component (A) may be used, or two or more kinds thereof may be used in combination. The blending amount of the component (A) in the entire composition including the first liquid and the second liquid is preferably 0.5 to 10.0 mass%, and more preferably 0.8 to 5.0 mass%.

The above organopolysiloxane itself, having an alkenyl group, is a publicly known compound, and produced by a conventionally publicly known method.

### [(B) Organohydrogenpolysiloxane Having At Least Two Hydrogen Atoms Bonded to Silicon Atom Per Molecule]

The component (B) is an organohydrogenpolysiloxane having at least two hydrogen atoms (hereinafter also referred to as "silicon-bonded hydrogen atoms") bonded to a silicon atom per molecule. The number of silicon-bonded hydrogen atoms per molecule of this organohydrogenpolysiloxane is preferably 2 to 100, more preferably 2 to 50, and particularly preferably 2 to 20. When the number of the silicon-bonded hydrogen atoms is too low, the crosslink density of the resulting thermally conductive silicone-cured product will be too low, resulting in no curing. When the number of the silicon-bonded hydrogen atoms is 100 or less, the resulting thermally conductive silicone-cured product has an appropriate crosslink density and is flexible, and has difficulty in void formation in the cured product due to dehydrogenation during storage or curing. The hydrogen atom bonded to silicon atom may be located at the molecular chain end, in the middle of the molecular chain, or both.

Examples of the component (B) include those represented by the following average composition formula (4).

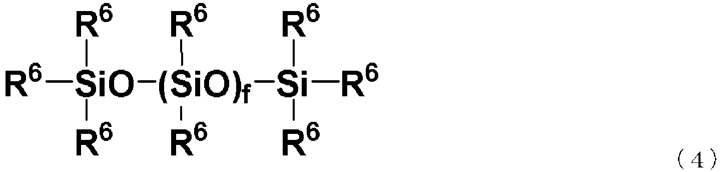

In the formula, R⁶ represents a hydrogen atom or independently a monovalent hydrocarbon group having no aliphatic unsaturated bond, and "f" represents a number from 8 to 1,000.

In the above formula (4), R⁶ independently represents a monovalent hydrocarbon group having no aliphatic unsaturated bond, preferably having 1 to 12 carbon atoms, more preferably 1 to 6 carbon atoms. Specific examples thereof include alkyl groups, such as a methyl group, an ethyl group, a propyl group, an isopropyl group, an butyl group, an isobutyl group, a tert-butyl group, a pentyl group, a hexyl group, a cyclohexyl group, an octyl group, and a dodecyl; aryl groups, such as a phenyl group, a 1-naphthyl group, a 2-naphthyl group, and a tolyl; aralkyl groups, such as a benzyl group and a 2-phenylethyl group; and groups in which part or all of the hydrogen atoms in these groups are substituted with halogen atoms, such as fluorine, chlorine, and bromine, such as a chloromethyl group or a 3,3,3-trifluoropropyl group. Among these, from the viewpoint of ease of synthesis, a methyl group, a phenyl group, and a 3,3,3-trifluoropropyl group are preferable.

The number of silicon atoms in one molecule of the organohydrogenpolysiloxane of the component (B) (i.e., degree of polymerization) is typically 8 to 1,000, but from the viewpoints of improving handling properties and processability of the composition and the properties of the resulting cured product, it is preferably 20 to 500, and more preferably 20 to 100. When the degree of polymerization is 8 or higher, the resulting thermally conductive silicone composition has an appropriate viscosity, preferable handling properties, and processability, and the resulting cured product does not become brittle. When the degree of polymerization is 1,000 or lower, the resulting thermally conductive silicone composition has appropriate viscosity and preferable handling properties and processability.

Furthermore, there are no particular restrictions on the molecular structure of the organohydrogenpolysiloxane of the component (B), as long as it satisfies the above requirements.

The viscosity of the organohydrogenpolysiloxane of component (B) is typically 1 to 10,000 mPa s, preferably 3 to 2,000 mPa s, and more preferably 10 to 1,000 mPa s, and it is desirable to be liquid at room temperature (25°C). In the present invention, unless otherwise specified, the viscosity is a value measured with a BM-type viscometer (for example, manufactured by Tokyo Keiki Co., Ltd.). Rotor, rotation number, and rotation time are selected appropriately in accordance with the viscosity according to the conventional methods.

One kind of the organohydrogenpolysiloxane of the component (B) may be used, or two or more kinds thereof may be used in combination.

This organohydrogenpolysiloxane is synthesized by a conventionally known method.

The blending amount of the component (B) organohydrogenpolysiloxane is such that the number of silicon-bonded hydrogen atoms (SiH groups) is 0.1 to 5.0, preferably 0.2 to 2.0, and more preferably 0.5 to 1.5, each per alkenyl group in the component (A) in the entire composition, including the first liquid and the second liquid. When the blending amount is 0.1 or more, a sufficient effect of improving storage stability is obtained. When the blending amount is 5.0 or less, the resulting thermally conductive silicone-cured product has stable physical properties.

The component (B) is used in the second liquid and is not contained in the first liquid. When the component (B) is used in the first liquid, the first liquid thickens and hardens over time at room temperature, and therefore cannot maintain its viscosity at the time of production.

### [(C) Thermally Conductive Filler]

The component (C) is thermally conductive fillers and includes a thermally conductive filler comprising spherical aluminum oxide powder (C-1) with an average particle size of 80 to 120 µm, spherical aluminum oxide powder (C-2) with an average particle size of 60 to 80 µm, spherical aluminum oxide powder (C-3) with an average particle size of 25 to 60 µm, spherical aluminum oxide powder (C-4) with an average particle size of 5 to 25 µm, and spherical or irregularly shaped aluminum oxide powder (C-5) with an average particle size of 0.1 µm or more and less than 5 µm.

When the ranges of the average particle sizes of components (C-1) to (C-5) are expressed as above, the range of the average particle size of component (C-1) is inclusive, while the range of the average particle diameters of components (C-2) to (C-5) is inclusive of the lower limit of the numerical range but exclusive of the upper limit. In other words, the average particle diameter of component (C-1) is 80 µm or more and 120 µm or less, and, for example, the average particle diameter of component (C-2) is 60 µm or more and less than 80 µm.

The average particle size in the present invention can be measured using a laser diffraction/scattering particle size distribution analyzer, for example, "Microtrac MT3300EX" manufactured by Nikkiso Co., Ltd. The average particle size is determined by multiplying the measured particle size value by the relative particle amount (difference%) and dividing the result by the total relative particle amount (100%). The average particle size is the average diameter of the particles.

The average particle size of the component (C-1) is 80 to 120 µm, preferably 90 to 110 µm. When the average particle size of the component (C-1) is greater than 120 µm, it may cause wear on the kneader and stirring blades, increase material thickness during implementation and unevenness of sheet surface, which may increase the thermal resistivity. One kind of spherical aluminum oxide powder of the component (C-1) may be used, or two or more kinds thereof, which have different average particle sizes, may be used in combination.

When the powder size is measured using a laser diffraction/scattering particle size distribution analyzer, such as a "Microtrac MT3300EX" manufactured by Nikkiso Co., Ltd., and expressed in a particle size distribution, and the distribution is divided into two, the particle size at which the larger side has an abundance ratio of 10% and the smaller side has an abundance ratio of 90% is taken as "d90", the d90 of the component (C-1) is 90 µm or more and 170 µm or less, preferably from 110 µm or more and 150 µm or less.

The average particle size of the component (C-2) is 60 to 80 µm, preferably 65 to 75 µm. One kind of spherical aluminum oxide powder of the component (C-2) may be used, or two or more kinds thereof, which have different average particle sizes, may be used in combination.

The average particle size of the component (C-3) is 25 to 60 µm, preferably 30 to 55 µm. One kind of spherical aluminum oxide powder of the component (C-3) may be used, or two or more kinds thereof, which have different average particle sizes, may be used in combination.

The average particle size of the component (C-4) is 5 to 25 µm, preferably 8 to 20 µm. One kind of spherical aluminum oxide powder of the component (C-4) may be used, or two or more kinds thereof, which have different average particle sizes, may be used in combination.

The average particle size of the component (C-5) is 0.1 to 5 µm, preferably 0.5 to 3 µm. When the average particle size is less than 0.1 µm, surface area of the particles increases; the interface area between the particles and the resin also increases; interfacial thermal resistance increases; and the composition tends to have worsened thermal conductivity, and it has a problem of significantly increased viscosity. One kind of spherical aluminum oxide powder of the component (C-4) may be used, or two or more kinds thereof, which have different average particle sizes, may be used in combination.

The shape of component (C-5) is spherical or irregularly shaped aluminum oxide powder. While either spherical or irregularly shaped particles may be used, the irregular shapes are preferable because spherical particles result in point contact between filler particles, reducing the contact area between the filler particles. In other words, in the present invention, it is preferable that the component (C-5) is irregularly shaped aluminum oxide powder. Shapes other than spherical are defined as irregular. Here, "spherical" refers to fillers with an average circularity of 0.85 or more. The average circularity is calculated as follows. In a particle image taken with a scanning electron microscope, when the projected area (S) and perimeter (L) of a particle are taken, and the area of a perfect circle corresponding to the perimeter (L) is taken as (X), the circularity of the particle is calculated as S/X.

Therefore, when a perfect circle (radius "r") with the same perimeter as the perimeter (L) of the sample particle is assumed, then L = 2πr and X = nr2, so X = π × (L/2π)2, and the circularity of each particle can be calculated as "circularity = S/X = S × 4π/L2". A circularity of 1 means a perfect circle, and the further away from a perfect circle it is, the closer the circularity is to 0.

In this way the circularity obtained for 100 randomly selected particles is determined, and the average value thereof is determined as the average sphericity.

The blending amount of component (C-1) is 200 to 600 parts by mass, preferably 230 to 550 parts by mass, based on 100 parts by mass of the sum of the components (A), (B), and (D). When the blending amount of the component C-1 is too low, fillability is poor, and thermal conductivity decreases. When the blending amount of the component C-1 is too high, fillability is also poor, viscosity increases, and wear on a kneader and stirring blades increases.

The blending amount of the component (C-2) is 200 to 500 parts by mass, preferably 230 to 450 parts by mass, and more preferably 250 to 400 parts by mass, based on 100 parts by mass of the sum of the components (A), (B), and (D). When the blending amount of the component (C-2) is too low or too high, it becomes difficult to fill the component (C) densely, resulting in a decrease in thermal conductivity and an increase in viscosity.

The blending amount of component (C-3) is 200 to 500 parts by mass, preferably 230 to 450 parts by mass, and more preferably 250 to 400 parts by mass, based on 100 parts by mass of the sum of components (A), (B), and (D). When the blending amount of the component (C-3) is too low or too high, it becomes difficult to fill the component (C) densely, resulting in a decrease in thermal conductivity and an increase in viscosity.

The blending amount of the component (C-4) is 200 to 500 parts by mass, preferably 230 to 450 parts by mass, and more preferably 250 to 400 parts by mass, based on 100 parts by mass of the sum of the components (A), (B), and (D). When the blending amount of the component (C-4) is too low or too high, it becomes difficult to fill the component (C) densely, resulting in a decrease in thermal conductivity and an increase in viscosity.

The blending amount of the component (C-5) is 300 to 700 parts by mass, preferably 330 to 660 parts by mass, and more preferably 350 to 630 parts by mass, based on 100 parts by mass of the sum of the components (A), (B), and (D). When the blending amount of component (C-5) is too low, it becomes difficult to fill the component (C) densely, and oil separation over time increases. When the blending amount of the component (C-5) is too high, it causes a problem of significantly increase in the composition's viscosity, and thermal conductivity decreases.

Total amount of the components (C-1) to (C-5) is 1700 to 2000 parts by mass, preferably 1800 to 1900 parts by mass, based on 100 parts by mass of the sum of the components (A), (B), and (D). When the blending amount is less than 1,700 parts by mass, the thermal conductivity of the composition may be insufficient, whereas when it exceeds 2000 parts by mass, it becomes difficult to fill the thermally conductive filler.

The crystalline structure of the aluminum oxide powder may be either single crystal or polycrystalline, but the crystalline phase is preferably the α phase from the viewpoint of high thermal conductivity, and the specific gravity is preferably 3.7 or higher. When the specific gravity is 3.7 or higher, the ratio of voids and low crystalline phase present inside the particles is appropriate, making it easy to increase thermal conductivity. In addition, the particle size distribution of the aluminum oxide powder can be adjusted by a classification operation.

As the thermally conductive filler of the component (C), only aluminum oxide powder is suitable from the viewpoints of thermal conductivity, moisture resistance, and fillability, and other thermally conductive fillers are not included.

The component (C) is used in both the first liquid and the second liquid, and the ratio of the component (C) used in the first liquid and the second liquid is not particularly limited, as long as the mixing ratio of the first liquid to the second liquid is approximately an equal mass ratio.

### [(D) Surface Treatment Agent]

The component (D) is a surface treatment agent, and includes a silane coupling agent and/or an organopolysiloxane represented by the following general formula (1).

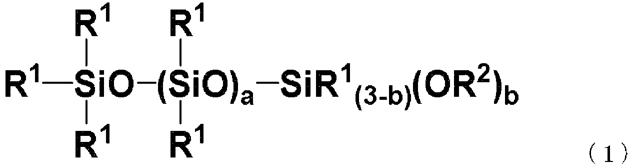

In the formula, R¹ represents independently a monovalent hydrocarbon group, R² represents independently an alkyl group, an alkoxyalkyl group, an alkenyl group, or an acyl group, "a" represents a positive number of 5 to 100, and "b" represents an integer of 1 to 3.

By incorporating the component (D), it is possible to obtain an effect of reducing the viscosity of the resulting silicone composition.

Examples of the silane coupling agents include vinyl silane coupling agents, epoxy silane coupling agents, acrylic silane coupling agents, and long-chain alkyl silane coupling agents. One kind of these silane coupling agents may be used, or two or more kinds thereof may be used in an appropriate combination. Examples include hexyltrimethoxysilane, decyltrimethoxysilane, hexadecyltrimethoxysilane, decylmethyldimethoxysilane, decyldimethylmethoxysilane, decyltriethoxysilane, 7-octenyltrimethoxysilane, and phenyltrimethoxysilane. Decyltrimethoxysilane is particularly preferable.

In the above formula (1), R¹ represents independently an unsubstituted or substituted monovalent hydrocarbon group preferably having 1 to 10 carbon atoms, more preferably 1 to 6, and further preferably 1 to 3 carbon atoms. Specific examples include alkyl groups, such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, and a dodecyl group; aryl groups, such as a phenyl group; and groups in which part or all of the hydrogen atoms of these groups have been substituted with halogen atoms, such as fluorine, chlorine, and bromine, or with cyano groups. These are exemplified by a chloromethyl group, a 3,3,3-trifluoropropyl group, a cyanoethyl group, etc. R¹ is preferably a methyl group, a phenyl group, or a 3,3,3-trifluoropropyl group.

In the general formula (1), R² represents independently an alkyl group, an alkoxyalkyl group, an alkenyl group, or an acyl group. Examples of the alkyl group include the same linear alkyl groups, branched alkyl groups, and cyclic alkyl groups as those exemplified for R³ above. Examples of the alkoxyalkyl group include a methoxyethyl group and a methoxypropyl group, and those having 2 to 10 carbon atoms are preferable. Examples of the alkenyl group include a vinyl group, an allyl group, an isopropenyl group, a 1-butenyl group, a 1-pentenyl group, and a 1-hexenyl group, and those having 1 to 8 carbon atoms are preferable. Examples of the acyl group include an acetyl group and an octanoyl group, and those having 2 to 10 carbon atoms are preferable. R² represents preferably an alkyl group, and particularly preferably a methyl group or an ethyl group.

Furthermore, "a" represents a number of 5 to 100, preferably a number of 8 to 50, and "b" represents a number of 1 to 3, preferably 3.

Specific examples of suitable organopolysiloxanes of component (D) include the following.

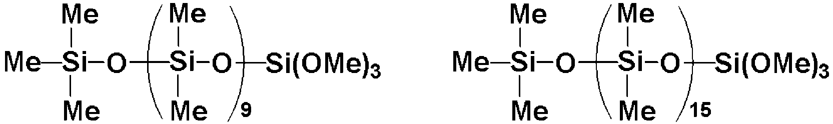

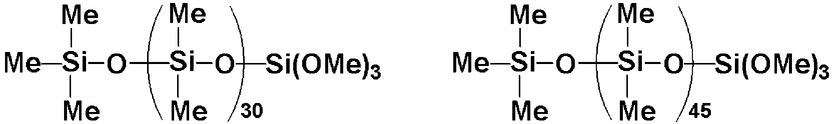

In the formula, Me represents a methyl group. The same applies hereinafter.

The viscosity at 25°C of the organopolysiloxane of the component (D) is typically 0.01 to 30 Pa·s, and preferably 0.1 to 10 Pa·s. When the viscosity is 0.01 Pa·s or higher, oil bleeding of the component (D) from the silicone composition is difficult to occur. When the viscosity is 30 Pa·s or lower, the resulting silicone composition has good fluidity and is easy to be applied.

In the present invention, when the component (D) is used, the component (D) is preferably mixed with the component (C) or the components (A) to (C) and heated at 70°C or higher, more preferably 80 to 180°C, to prepare a heat-treated mixture.

When the component (D) is used in the present invention, the aforementioned component (C) may also be pretreated with the component (D). By treating the component (C) with the component (D), it is possible to obtain an effect of lowering viscosity of the resulting silicone composition. In this case, for the surface treatment of the component (C) with the component (D), it is possible to adopt a spraying method using a fluid nozzle, a stirring method with shear force, a dry method using a ball mill or a mixer, or a wet method using an aqueous or organic solvent system. The stirring is performed to the extent that the thermally conductive filler is not destroyed. In the dry method, the system temperature or the drying temperature after the treatment is appropriately determined depending on a type of surface treatment agent, within a range that does not cause the surface treatment agent to volatilize or decompose, for example, 80 to 180°C.

When the component (D) is used, its blending amount is 100 to 200 parts by mass, preferably 110 to 190 parts by mass, and more preferably 120 to 180 parts by mass, based on 100 parts by mass of the sum of components (A) and (B). Less than 100 parts by mass results in a small effect to reduce viscosity. Furthermore, in two-part addition-curable materials, dehydrogenation of the organohydrogenpolysiloxane by the thermally conductive filler occurs during storage at room temperature. Therefore, if the amount of the silane coupling agent or the organopolysiloxane having an alkoxy group at one end is too small, it is not possible to prevent deterioration over time, in which its hardness decreases during storage at room temperature. When more than 200 parts by mass, hardness of the cured product sheet easily increases under moisture-resistant conditions, and elongation reduces, resulting in a material with poor reliability. The blending amount of the component (D) in the entire composition, including the first liquid and the second liquid, is preferably 1.5 to 4.7 mass%, more preferably 2.0 to 3.5 mass%.

The component (D) is used in both the first liquid and the second liquids. The ratio of the component (D) used in the first liquid and the second liquid is not particularly limited, but for example, the same amount may be used in the first liquid and the second liquid. The ratio can be set depending on the amount of the component (C) in each liquid.

### [(E) Platinum Group Metal Catalyst]

The component (E) of the inventive composition is a platinum group metal catalyst, which promotes the addition reaction of the alkenyl group in the component (A) and the hydrogen atom bonded to a silicon atom in the component (B). For example, chloroplatinic acid, alcohol-modified chloroplatinic acid, coordination compounds of chloroplatinic acid with olefins, aldehydes, vinylsiloxanes, or acetylene compounds, tetrakis(triphenylphosphine)palladium, chlorotris(triphenylphosphine)rhodium, etc. are used. Platinum catalysts are preferable, and coordination compounds of chloroplatinic acid with vinylsiloxane are most preferably used.

The blending amount of the component (E) may be a catalytic amount, but is typically 0.1 to 500 ppm, preferably 1 to 100 ppm, in terms of platinum group metal mass relative to the total composition combining the first and second liquids. It is preferable to keep the amount of component (E) within this range because it allows for appropriate curing properties to be obtained.

The component (E) is used in the first liquid and is not contained in the second liquid.

### [Others]

In addition to the above-described components (A) to (E), the inventive composition may contain various publicly known additives as an additional agent as needed. Examples of such additives are listed below.

For example, it is possible to blend: reaction inhibitors for adjusting curing rate and storage stability, which are specifically acetylene alcohols, silanes thereof and siloxane-modified products thereof, such as triallyl isocyanate alkyl maleate, ethynyldecylmethylcarbinol, ethynylcyclohexanol; hydroperoxides, and tetramethylethylenediamine; colorants using either alone or in combination of ferrous oxide, ferric oxide, etc.; thixotropic agents, such as fumed silica; and the like. The blending amount of each is preferably 0.01 to 100,000 ppm by mass in the present composition.

The mixing device used to prepare the composition may be a publicly known mixer, such as a static mixer, a planetary mixer, or a paddle mixer.

### [Manufacturing Method]

The inventive composition is a thermally-conductive two-part addition-curable silicone composition including a first liquid, which contains the above-mentioned components (A), (C), (D), and (E) but not the above-mentioned component (B), and a second liquid, which contains the above-mentioned components (A), (B), (C), and (D) but not the above-mentioned component (E).

The method for manufacturing the inventive composition simply involves mixing the components of the first and second liquids. For example, the method for manufacturing the first liquid includes the following steps:
mixing the components (A), (C), and (D) and heating them at a temperature of 70°C or higher to obtain a heated mixture;
cooling the heated mixture obtained above to below room temperature (25°C), and then adding the component (E), a reaction inhibitor, a colorant, and a thixotropic agent;
For the second liquid, mixing the components (A), (C), and (D) and heating them at a temperature of 70°C or higher to obtain a heated mixture; and
cooling the heated mixture obtained above to below room temperature (25°C), and then adding the component (B), a reaction inhibitor, a colorant, and a thixotropic agent.

The heating temperature during the heating is preferably 70°C or higher, more preferably 70 to 180°C. The heating time is not particularly limited, and is preferably 1 hour or longer, more preferably 1 to 3 hours. When an additive is added, it may be added in any step, but it is preferably added after the heated mixture has cooled. As a mixing device for preparing the above compositions, publicly known mixers, such as a static mixer, a planetary mixer, or a paddle mixer, may be used.

In the present invention, it is preferable that each of the first liquid and the second liquid has a viscosity at 25°C of 30 to 800 Pa·s when measured at a rotation number of 10 rpm using a spiral viscometer.

The viscosity at 25°C of the inventive composition, measured using a spiral viscometer: Malcom viscometer (Type PC-10AA, rotation number: 10 rpm), is 30 to 800 Pa·s for each of the first and second liquids, and preferably 70 to 400 Pa·s. When the viscosity is 30 Pa·s or higher, the shape retention of the composition is sufficient, and when it is 800 Pa·s or lower, processability is not impaired. In the present invention, the viscosity can be adjusted to the above range, particularly by adjusting the blending amount and blending ratio of the component (C) within the range specified above.

The thermal conductivity of the inventive composition each is preferably 5.5 W/m K or more, and more preferably 5.7 W/m K or more, when measured by a Hot Disk method in accordance with ISO 22007-2. A thermal conductivity of 5.5 W/m K or more ensures sufficient heat-dissipation performance of heat-generating electronic components. There is no particular upper limit to the thermal conductivity, but it is preferably 6.9 W/m K or less, more preferably 6.7 W/m K or less. In the present invention, a thermal conductivity within the above range can be achieved, particularly by adjusting the blending amount and blending ratio of the component (C) within the ranges specified above.

The present invention provides a thermally conductive sheet which is made by curing the above-mentioned thermally conductive two-part addition-curable silicone composition.

For example, a thermally conductive sheet can be obtained by mixing the first and second liquids of the inventive composition in any desired mixing ratio, molding the mixture consecutively, and leaving it at room temperature or heating it at 40 to 200°C. However, the mixing ratio "the first liquid : the second liquid" in weight is preferably 130:100 to 100:130, and more preferably 110:100 to 100:110.

The form of the thermal conductive sheet is not limited; for example, it may be gel-like, rubbery with low hardness, or rubbery with high hardness, and it is preferably rubbery with low hardness . Here, low hardness refers to a value as measured using a Shore OO hardness meter specified in ASTM D 2240-05, 20 to 80, preferably within the range of 30 to 70. When the hardness is 20 or greater, it become difficult for a heat-dissipation material to shift or fall off from its mounted position due to shocks such as vibration after mounting. Furthermore, when the hardness is 80 or less, stress on an electronic component does not increase, thereby preventing adverse effects on solder life.

As described above, the present invention provides a cured product of the above thermally-conductive two-part addition-curable silicone composition, wherein the sheet-like cured product obtained by curing the thermally-conductive two-part addition-curable silicone composition has a hardness in the range of 20 to 80 as measured using a Shore OO hardness meter specified in ASTM D 2240-05.

Regarding elongation of the sheet-like cured product (thermally conductive sheet) obtained by curing the inventive composition, an elongation at break is preferably 20% or more, as measured according to a tensile test specified in JIS K 7161 using a dumbbell tensile test piece No. 2 in accordance with JIS K 6251. When the elongation is 20% or more, the heat-dissipation material can follow warpage of an electronic component when heat is applied to the electronic component after mounting. There is no particular upper limit to the elongation, but it is preferable 70% or less.

The thickness of the sheet is not particularly limited, but is preferably 150 µm or more and, in consideration of the size of the electronic components to be mounted, is preferably 5 mm or less.

The present invention also provides a cured product of the thermally-conductive two-part addition-curable silicone composition, wherein the sheet-like cured product hardness obtained by curing the thermally-conductive two-part addition-curable silicone composition has an elongation at break of 10% or more, as exposed to 85°C/85% RH for 1000 hours and then measured according to a tensile test specified in JIS K 7161 using a dumbbell tensile test piece No. 2 in accordance with JIS K 6251.

The elongation at break is preferably 20% or more. The elongation at break after the moisture resistance test within the above range can be achieved, particularly by making the blending amount of the component (D) within the ranges specified above.

Such a thermally conductive sheet has high thermal conductivity and reduces an increase in hardness and a decrease in elongation of the cured product due to moisture-resistant conditions, making it useful as an excellent heat-dissipation material for heat-generating electronic components.

### EXAMPLE

Hereinafter, the present invention will be described in detail with reference to Examples and Comparative Examples. However, the present invention is not limited thereto.

### Component (A)

A-1: Dimethylpolysiloxane with both molecular chain ends blocked with dimethylvinylsiloxy groups (kinematic viscosity: 400 mm²/s, amounts of Vi groups per 100 g: 0.0185 mol, "e" in the general formula (3) is 146.)

### Component (B)

B-1: Methylhydrogen-dimethylpolysiloxane, blocked with trimethylsiloxy group, represented by the formula (5) (amounts of Si-H: 0.00128 mol/g) 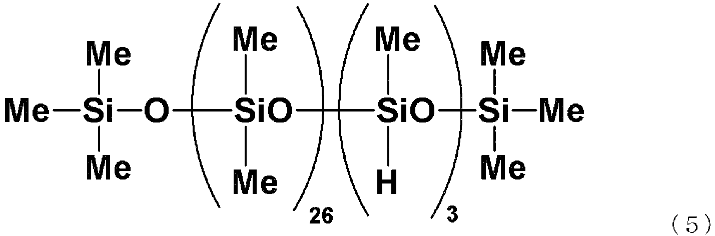
B-2: Dimethylpolysiloxane, blocked with dimethylhydrogensiloxy group, represented by the formula (6) (amounts of Si-H: 0.00130 mol/g)

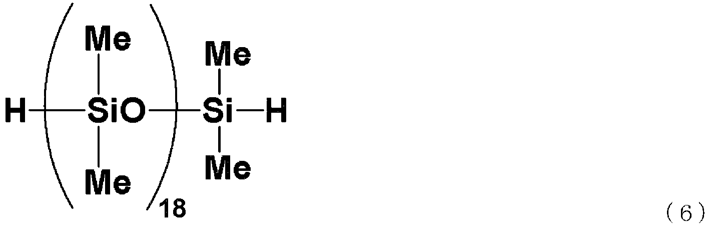

### Component (C)

C-1-1: Spherical aluminum oxide (average particle size 100 µm, density 3.98 g/cm³)
C-2-1: Spherical aluminum oxide (average particle size 70 µm, density 3.98 g/cm³)
C-3-1: Spherical aluminum oxide (average particle size 45 µm, density 3.98 g/cm³)
C-4-1: Spherical aluminum oxide (average particle size 10 µm, density 3.98 g/cm³)
C-5-1: Spherical aluminum oxide (average particle size 3 µm, density 3.98 g/cm³)
C-5-2: Irregularly shaped aluminum oxide (average particle size 1.2 µm, density 3.98 g/cm³)
(For comparison)
c-6-1: Spherical aluminum oxide (average particle size 150 µm, density 3.98 g/cm³)

### Component (D)

D-1: Organopolysiloxane represented by the formula (7)

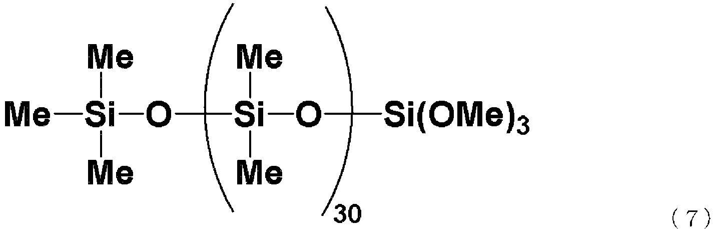

### Component (E)

E-1: Chloroplatinic acid vinylsiloxane complex (Pt content: 1 mass%)

### First Liquid

The components (A), (C), and (D) were added and mixed in the mass ratios shown in Tables 1-3 into a 5L planetary mixer manufactured by Inoue Seisakusho Co., Ltd., and then heated and mixed at 150°C for 1 hour to obtain a mixture 1.

Next, after thoroughly cooling the mixture 1 to room temperature (25°C), the component (E) was added in the mass ratios shown in Tables 1-3 below and mixed uniformly at room temperature (25°C) for 20 minutes to obtain a first liquid.

### Second Liquid

The components (A), (C), and (D) were added and mixed in the mass ratios shown in Tables 1-3 into a 5L planetary mixer manufactured by Inoue Seisakusho Co., Ltd., and then heated and mixed at 150°C for 1 hour to obtain a mixture 2.

Next, after thoroughly cooling the mixture 2 to room temperature (25°C), the component (B) was added in the mass ratios shown in Tables 1-3 below and mixed uniformly at room temperature (25°C) for 20 minutes to obtain a second liquid.

### Viscosity

For the first and second liquids of each example, viscosity was measured at 25°C using a spiral viscometer: Malcom viscometer (Type PC-10AA, rotation number: 10 rpm).

### Thermal Conductivity

In each example, the first and second liquids were mixed uniformly at a 1:1 mass ratio using a static mixer MXA6.3-21 (manufactured by Noritake Co., Ltd.) at room temperature (25°C) and discharged. The discharged mixture was then thoroughly degassed under vacuum, poured into a mold to form a cured product with a thickness of 6 mm, and then cured at 25°C for 24 hours to obtain a sheet-like cured product.

The thermal conductivity of the resulting cured product at 25°C was measured using a Hot Disc thermal property analyzer TPS 2500 S (Kyoto Electronics Manufacturing Co., Ltd.) (Hot Disc method in accordance with ISO 22007-2).

### Hardness

In each example, the first and second liquids were mixed uniformly at a 1:1 mass ratio using a static mixer MXA6.3-21 (manufactured by Noritake Co., Ltd.) at room temperature (25°C) and discharged. The discharged mixture was then thoroughly degassed under vacuum, poured into a mold to form a cured product with a thickness of 6 mm, and then cured at 25°C for 24 hours to obtain a sheet-like cured product.

The hardness of the resulting cured product was measured using a Shore OO hardness meter, as specified in ASTM D 2240-05, and the value measured at 30 seconds after the start of measurement was adopted.

### Moisture Resistance Test

In Example 1 and Comparative Example 1, the first and second liquids were mixed uniformly at a 1:1 mass ratio using a static mixer MXA6.3-21 (manufactured by Noritake Co., Ltd.) at room temperature (25°C) and discharged. The discharged mixture was then thoroughly degassed under vacuum, poured into a mold to form a cured product with a thickness of 2 mm, and then cured at 25°C for 24 hours to obtain a sheet-like cured product. Subsequently, the cured thermally conductive silicone was then stored in a constant temperature and humidity chamber at 85°C/85% RH and aged for 1,000 hours. After 1,000 hours, the cured silicone was retrieved.

Tensile test pieces of a dumbbell shape (No. 2) in accordance with JIS K 6251 were punched out of the cured products before and after the aging, and elongations at break of the test pieces were measured according to the tensile test specified in JIS K 7161.

The results for the viscosity, thermal conductivity, and hardness are shown in Tables 1-3, and the results of the moisture resistance test are shown in Table 4. In the tables, "H/Vi" represents the molar ratio of the silicon-bonded hydrogen atoms (SiH groups) in the component (B) to one alkenyl group in the component (A) in the entire composition, including the first and second parts combined.

**[Table 1]**

| First liquid / Second liquid | Example 1 | Example 2 | Example 3 | Example 4 | Example 5 |
|---|---|---|---|---|---|
| A-1 (parts by mass) | 29/19 | 29/19 | 29/19 | 29/19 | 29/19 |
| B-1 (parts by mass) | -/1.1 | -/1.1 | -/1.1 | -/1.1 | -/1.1 |
| B-2 (parts by mass) | -/6.0 | -/6.0 | -/6.0 | -/6.0 | -/6.0 |
| C-1-1 (parts by mass) | 240/240 | 360/360 | 220/220 | 180/180 | 264/264 |
| C-2-1 (parts by mass) | 240/240 | 200/200 | 220/220 | 260/260 | 264/264 |
| C-3-1 (parts by mass) | 240/240 | 200/200 | 220/220 | 260/260 | 264/264 |
| C-4-1 (parts by mass) | 240/240 | 200/200 | 220/220 | 260/260 | 264/264 |
| C-5-1 (parts by mass) | | | | | |
| C-5-2 (parts by mass) | 360/360 | 360/360 | 440/440 | 360/360 | 264/264 |
| c-6-1 (parts by mass) | | | | | |
| D-1 (parts by mass) | 44/44 | 44/44 | 44/44 | 44/44 | 44/44 |
| E-1 (parts by mass) | 0.42/- | 0.42/- | 0.42/- | 0.42/- | 0.42/- |
| H/Vi | 1.04 | 1.04 | 1.04 | 1.04 | 1.04 |
| Amount of component C-1 based on 100 parts by mass of sum of components A, B, and D (parts by mass) | 335 | 503 | 307 | 252 | 369 |
| Amount of component C-2 based on 100 parts by mass of sum of components A, B, and D (parts by mass) | 335 | 280 | 307 | 363 | 369 |
| Amount of component C-3 based on 100 parts by mass of sum of components A, B, and D (parts by mass) | 335 | 280 | 307 | 363 | 369 |
| Amount of component C-4 based on 100 parts by mass of sum of components A, B, and D (parts by mass) | 335 | 280 | 307 | 363 | 369 |
| Amount of component C-5 based on 100 parts by mass of sum of components A, B, and D (parts by mass) | 503 | 503 | 615 | 503 | 369 |
| Amount of component C based on 100 parts by mass of sum of components A, B, and D (parts by mass) | 1845 | 1845 | 1845 | 1845 | 1845 |
| Amount of component D based on 100 parts by mass of sum of components A and B (parts by mass) | 160 | 160 | 160 | 160 | 160 |
| Amount of component E based on sum of components A to E (ppm) | 1.51 | 1.51 | 1.51 | 1.51 | 1.51 |
| Viscosity (Pa·s) | 215/206 | 232/225 | 262/250 | 237/225 | 184/173 |
| Thermal conductivity (W/mK) | 6.2 | 6.4 | 6.0 | 6.1 | 6.3 |
| Hardness (Shore OO) | 55 | 58 | 65 | 61 | 48 |

**[Table 2]**

| First liquid / Second liquid | Example 6 | Example 7 | Comparative Example 1 | Comparative Example 2 | Comparative Example 3 |
|---|---|---|---|---|---|
| A-1 (parts by mass) | 34/24 | 29/19 | 22/17 | 23/17 | 29/19 |
| B-1 (parts by mass) | -/1.1 | -/1.1 | -/0.9 | -/0.8 | -/1.1 |
| B-2 (parts by mass) | -/6.0 | -/6.0 | -/4.9 | -/5.1 | -/6.0 |
| C-1-1 (parts by mass) | 240/240 | 240/240 | 240/240 | | |
| C-2-1 (parts by mass) | 240/240 | 240/240 | 240/240 | 175/175 | 240/240 |
| C-3-1 (parts by mass) | 240/240 | 240/240 | 240/240 | 175/175 | 240/240 |
| C-4-1 (parts by mass) | 240/240 | 240/240 | 240/240 | 175/175 | 240/240 |
| C-5-1 (parts by mass) | | 360/360 | | | |
| C-5-2 (parts by mass) | 360/360 | | 360/360 | 350/350 | 360/360 |
| c-6-1 (parts by mass) | | | | | 240/240 |
| D-1 (parts by mass) | 39/39 | 44/44 | 49/49 | 30/30 | 44/44 |
| E-1 (parts by mass) | 0.42/- | 0.42/- | 0.42/- | 0.25/- | 0.42/- |
| H/Vi | 0.86 | 1.04 | 1.04 | 1.03 | 1.04 |
| Amount of component C-1 based on 100 parts by mass of sum of components A, B, and D (parts by mass) | 335 | 335 | 336 | | |
| Amount of component C-2 based on 100 parts by mass of sum of components A, B, and D (parts by mass) | 335 | 335 | 336 | 331 | 335 |
| Amount of component C-3 based on 100 parts by mass of sum of components A, B, and D (parts by mass) | 335 | 335 | 336 | 331 | 335 |
| Amount of component C-4 based on 100 parts by mass of sum of components A, B, and D (parts by mass) | 335 | 335 | 336 | 331 | 335 |
| Amount of component C-5 based on 100 parts by mass of sum of components A, B, and D (parts by mass) | 503 | 503 | 504 | 661 | 503 |
| Amount of component C based on 100 parts by mass of sum of components A, B, and D (parts by mass) | 1845 | 1845 | 1849 | 1653 | 1845 |
| Amount of component D based on 100 parts by mass of sum of components A and B (parts by mass) | 120 | 160 | 219 | 131 | 160 |
| Amount of component E based on sum of components A to E (ppm) | 1.51 | 1.51 | 1.51 | 1.35 | 1.51 |
| Viscosity (Pa·s) | 248/232 | 193/160 | 101/113 | 227/208 | Unmeasurable |
| Thermal conductivity (W/mK) | 6.2 | 6.1 | 6.2 | 5.3 | 6.6 |
| Hardness (Shore OO) | 63 | 50 | 55 | 42 | 60 |

**[Table 3]**

| First liquid / Second liquid | Comparative Example 4 | Comparative Example 5 | Comparative Example 6 |
|---|---|---|---|
| A-1(parts by mass) | 42/30 | 29/19 | 29/19 |
| B-1(parts by mass) | -/1.7 | -/1.1 | -/1.1 |
| B-2(parts by mass) | -/9.0 | -/6.0 | -/6.0 |
| C-1-1(parts by mass) | 240/240 | 600/600 | 180/180 |
| C-2-1(parts by mass) | 240/240 | 180/180 | 180/180 |
| C-3-1(parts by mass) | 240/240 | 180/180 | 180/180 |
| C-4-1(parts by mass) | 240/240 | 180/180 | 180/180 |
| C-5-1(parts by mass) | | | |
| C-5-2(parts by mass) | 360/360 | 180/180 | 600/600 |
| c-6-1(parts by mass) | | | |
| D-1(parts by mass) | 30/30 | 44/44 | 44/44 |
| E-1(parts by mass) | 0.42/- | 0.42/- | 0.42/- |
| H/Vi | 1.04 | 1.04 | 1.04 |
| Amount of component C-1 based on 100 parts by mass of sum of components A, B, and D (parts by mass) | 336 | 839 | 252 |
| Amount of component C-2 based on 100 parts by mass of sum of components A, B, and D (parts by mass) | 336 | 252 | 252 |
| Amount of component C-3 based on 100 parts by mass of sum of components A, B, and D (parts by mass) | 336 | 252 | 252 |
| Amount of component C-4 based on 100 parts by mass of sum of components A, B, and D (parts by mass) | 336 | 252 | 252 |
| Amount of component C-5 based on 100 parts by mass of sum of components A, B, and D (parts by mass) | 505 | 252 | 839 |
| Amount of component C based on 100 parts by mass of sum of components A, B, and D (parts by mass) | 1850 | 1845 | 1845 |
| Amount of component D based on 100 parts by mass of sum of components A and B (parts by mass) | 73 | 160 | 160 |
| Amount of component E based on sum of components A to E (ppm) | 1.51 | 1.51 | 1.51 |
| Viscosity (Pa·s) | Unmeasurable | Unmeasurable | 486/444 |
| Thermal conductivity (W/mK) | 6.2 | 6.3 | 5.2 |
| Hardness (Shore OO) | 75 | 72 | 68 |

**[Table 4]**

| Moisture resistance test | Example 1 | Comparative Example 1 |
|---|---|---|
| Initial elongation (%) | 40 | 40 |
| Elongation after moisture resistance test (%) | 20 | <10 |

The above results indicate that, in cases of the inventive thermally conductive two-part addition-curable silicone compositions of Examples 1 to 7, the sheet-like cured products, having the thermal conductivity in the above-mentioned preferrable range of 5.5 to 6.9 W/m·K as measured according to the Hot Disk method according to ISO 22007-2, were obtained, demonstrating excellent thermal conductivity. Furthermore, the viscosities of the first and second liquids of the thermally conductive silicone composition, and the hardness of the sheet-like cured products, were also suitable as heat-dissipation material for heat-generating electronic components (Tables 1 and 2). Furthermore, as shown in Table 4, in Example 1, which contains an appropriate amount of the component (D), the decrease in the elongation after 1,000 hours of storage at 85°C/85% RH are reduced, and in Comparative Example 1, which contains an excessive amount of component (D), the elongation decrease significantly under moisture-resistant conditions, demonstrating poor reliability. Furthermore, Comparative Example 2 demonstrates that sufficient thermal conductivity cannot be achieved when the component (C-1) is not contained (Table 2). In Comparative Example 3, when the particle size of the component (C-1) is large (instead, containing the component (c-6-1) having a large particle size), and in Comparative Example 4, when the amount of the component (D) is too small, the viscosity increases significantly to the extent that it is unmeasurable (Tables 2 and 3). Furthermore, Comparative Example 5 demonstrates that the viscosity also increases when there is a large amount of the component (C-1) and a small amount of the component (C-5). Comparative Example 6 demonstrates that sufficient thermal conductivity cannot be obtained when there is a small amount of the component (C-1) and an excessive amount of the component (C-5). Thus, according to the present invention, it is possible to obtain a thermally conductive silicone composition that has high thermal conductivity and high reliability under moisture-resistant conditions and a cured product thereof.

### [INDUSTRIAL APPLICABILITY]

The thermally conductive silicone composition obtainable by the present invention has particularly excellent thermal conductivity, is easy to handle, and also exhibits excellent durability and reliability under high-temperature and high-humidity conditions.
Therefore, it is expected to improve reliability in applications as both a heat dissipation and protection device for electronic components such as power devices, transistors, thyristors, CPUs (central processing units), and GPUs (graphics processing units).

The present description includes the following embodiments.
[1]: A thermally-conductive two-part addition-curable silicone composition comprising a first liquid and a second liquid, and comprising:
   (A) organopolysiloxane having at least two alkenyl groups bonded to a silicon atom per molecule;
   (B) organohydrogenpolysiloxane having at least two hydrogen atoms bonded to a silicon atom per molecule;
   (C) a thermally conductive filler comprising spherical aluminum oxide powder (C-1) with an average particle size of 80 µm or more and 120 µm or less, spherical aluminum oxide powder (C-2) with an average particle size of 60 µm or more and less than 80 µm, spherical aluminum oxide powder (C-3) with an average particle size of 25 µm or more and less than 60 µm, spherical aluminum oxide powder (C-4) with an average particle size of 5 µm or more and less than 25 µm, and spherical or irregularly shaped aluminum oxide powder (C-5) with an average particle size of 0.1 µm or more and less than 5 µm;
   (D) a silane coupling agent and/or organopolysiloxane represent by the following general formula (1), 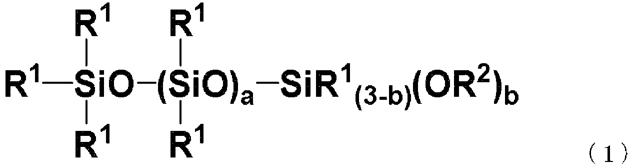 wherein R¹ represents independently a monovalent hydrocarbon group, R² represents independently an alkyl group, an alkoxyalkyl group, an alkenyl group, or an acyl group, "a" represents a positive number of 5 to 100, and "b" represents an integer of 1 to 3; and
   (E) a platinum catalyst for a hydro-silylation reaction,
      wherein, among the components (A) to (E), the first liquid contains the components (A), (C), (D), and (E) and does not contain the component (B), and the second liquid contains the components (A), (B), (C), and (D), and does not contain the component (E),
      the component(D) is contained in an amount of 100 to 200 parts by mass based on 100 parts by mass of sum of the components (A) and (B) in the entire composition including the first liquid and the second liquid,
      the component(C-1) is contained in an amount of 200 to 600 parts by mass, the component(C-2) is contained in an amount of 200 to 500 parts by mass, the component(C-3) is contained in an amount of 200 to 500 parts by mass, the component(C-4) is contained in an amount of 200 to 500 parts by mass, the component(C-5) is contained in an amount of 300 to 700 parts by mass, each based on 100 parts by mass of sum of components (A), (B), and (D), and
      total amount of the components (C-1) to (C-5) is 1700 to 2000 parts by mass based on 100 parts by mass of the sum of components (A), (B), and (D).
[2]: The thermally-conductive two-part addition-curable silicone composition of the above [1], wherein viscosity at 25°C of each of the first liquid and the second liquid is 30 to 800 Pa·s when measured at a rotation number of 10 rpm using a spiral viscometer.
[3]: The thermally-conductive two-part addition-curable silicone composition of the above [1] or [2], wherein the component (C-5) is irregularly shaped aluminum oxide powder.
[4]: A cured product of the thermally-conductive two-part addition-curable silicone composition of any one of the above [1] to [3], wherein the sheet-like cured product obtained by curing the thermally-conductive two-part addition-curable silicone composition has a hardness in the range of 20 to 80 as measured using a Shore OO hardness meter specified in ASTM D 2240-05.
[5]: A cured product of the thermally-conductive two-part addition-curable silicone composition of any one of above [1] to [3], wherein the sheet-like cured product hardness obtained by curing the thermally-conductive two-part addition-curable silicone composition has an elongation at break of 10% or more, as exposed to 85°C/85% RH for 1000 hours and then measured according to a tensile test specified in JIS K 7161 using a dumbbell tensile test piece No. 2 in accordance with JIS K 6251.
[6]: A thermally conductive sheet, which is the thermally conductive sheet made by curing a thermally-conductive two-part addition-curable silicone composition according to any one of above [1] to [3].

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A thermally-conductive two-part addition-curable silicone composition comprising a first liquid and a second liquid, and comprising:
(A) organopolysiloxane having two or more alkenyl groups bonded to a silicon atom per molecule;
(B) organohydrogenpolysiloxane having two or more hydrogen atoms bonded to a silicon atom per molecule;
(C) a thermally conductive filler comprising spherical aluminum oxide powder (C-1) with an average particle size of 80 µm or more and 120 µm or less, spherical aluminum oxide powder (C-2) with an average particle size of 60 µm or more and less than 80 µm, spherical aluminum oxide powder (C-3) with an average particle size of 25 µm or more and less than 60 µm, spherical aluminum oxide powder (C-4) with an average particle size of 5 µm or more and less than 25 µm, and spherical or irregularly shaped aluminum oxide powder (C-5) with an average particle size of 0.1 µm or more and less than 5 um;
(D) either or both of a silane coupling agent and organopolysiloxane represented by the following general formula (1), 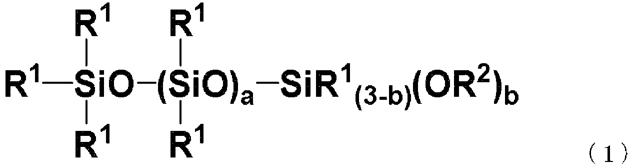 wherein R¹ represents independently a monovalent hydrocarbon group, R² represents independently an alkyl group, an alkoxyalkyl group, an alkenyl group, or an acyl group, "a" represents a positive number of 5 to 100, and "b" represents an integer of 1 to 3; and
(E) a platinum catalyst for a hydro-silylation reaction,
wherein, among the components (A) to (E), the first liquid contains the components (A), (C), (D), and (E) and does not contain the component (B), and the second liquid contains the components (A), (B), (C), and (D) and does not contain the component (E),
the component (D) is contained in an amount of 100 to 200 parts by mass based on 100 parts by mass of sum of the components (A) and (B) in the entire composition including the first liquid and the second liquid,
the component (C-1) is contained in an amount of 200 to 600 parts by mass, the component (C-2) is contained in an amount of 200 to 500 parts by mass, the component (C-3) is contained in an amount of 200 to 500 parts by mass, the component (C-4) is contained in an amount of 200 to 500 parts by mass, the component (C-5) is contained in an amount of 300 to 700 parts by mass, each based on 100 parts by mass of sum of the components (A), (B), and (D), and
total amount of the components (C-1) to (C-5) is 1700 to 2000 parts by mass based on 100 parts by mass of the sum of the components (A), (B), and (D).

2. The thermally-conductive two-part addition-curable silicone composition according to claim 1, wherein viscosity at 25°C of each of the first liquid and the second liquid is 30 to 800 Pa·s when measured at a rotation number of 10 rpm using a spiral viscometer.

3. The thermally-conductive two-part addition-curable silicone composition according to claim 1, wherein the component (C-5) is irregularly shaped aluminum oxide powder.

4. A cured product of the thermally-conductive two-part addition-curable silicone composition according to any one of claims 1 to 3, wherein the sheet-like cured product obtained by curing the thermally-conductive two-part addition-curable silicone composition has a hardness in the range of 20 to 80 as measured using a Shore OO hardness meter specified in ASTM D 2240-05.

5. A cured product of the thermally-conductive two-part addition-curable silicone composition according to any one of claims 1 to 3, wherein the sheet-like cured product hardness obtained by curing the thermally-conductive two-part addition-curable silicone composition has an elongation at break of 10% or more, as exposed to 85°C/85% RH for 1000 hours and then measured according to a tensile test specified in JIS K 7161 using a dumbbell tensile test piece No. 2 in accordance with JIS K 6251.

6. A thermally conductive sheet, which is the thermally conductive sheet made by curing the thermally-conductive two-part addition-curable silicone composition according to any one of claims 1 to 3.
